# EUROPÄISCHE PATENTANMELDUNG

(11) **EP 0 591 687 A1**
(43) Veröffentlichungstag der Anmeldung: **13.04.1994**
(21) Anmeldenummer: 93114213.7
(22) Anmeldetag: 04.09.1993
(51) Int. Cl.: F16K 27/02, F16K 1/22

(54) **Absperrklappe zum Einsetzen zwischen zwei Rohrleitungen**

(30) Priorität: 05.10.1992 DE 9213359 U
(71) Anmelder: PFEIFFER CHEMIE-ARMATURENBAU GmbH, D-47906 Kempen (DE)
(72) Erfinder: Pfeiffer, Horst, D-47877 Wellich-Neersen (DE)
(74) Vertreter: Sroka, Peter-Christian, Dipl.-Ing.

(57) **Zusammenfassung**

Eine Absperrklappe mit Gehäuse zum Einsetzen zwischen zwei Rohrleitungen, die an ihren Anschlußenden Bundflansche mit Kugel- bzw. Pfanne-Dichtflächen aufweisen, ist dadurch gekennzeichnet, daß das Gehäuse (1) aus einem elastisch verformbaren Material besteht und an seinen beiden Anschlußseiten jeweils einen inneren Bundflansch mit einer Pfanne-Dichtfläche (2) und einen äußeren Bundflansch mit einer Kugel-Dichtfläche (3) aufweist.

## Beschreibung

Die Erfindung betrifft eine Absperrklappe mit Gehäuse zum Einsetzen zwischen zwei Rohrleitungen, die an ihren Anschlußenden Bundflansche mit Kugel- bzw. Pfanne-Dichtflächen aufweisen.

Es ist insbesondere bei Glas-Rohrleitungen üblich, diese an den Rohrleitungsenden mit sogenannten Bundflanschen mit sphärisch geschliffenen Dichtflächen auszugestalten, die als sogenannte Kugel- bzw. Pfanne-Dichtflächen bezeichnet werden.

Wenn in ein derartiges Bundflansch-Rohrleitungssystem das Gehäuse einer üblichen Absperrklappe mit beidseitig planaren Ringflanschen eingesetzt wird, ist es erforderlich, zwischen den jeweiligen Gehäuse-Ringflansch und den daran anschließenden, sphärisch geschliffenen Bundflansch der Glas-Rohrleitung ein Zwischenstück zwischenzulegen, welches an der einen Seite einen planaren Ringflansch und an der anderen Seite einen zu dem sphärischen Bundflansch der Glas-Rohrleitung komplementären, ebenfalls sphärisch geschliffenen Bundflansch aufweist.

Ein derartiges System ist einerseits aufwendig in der Herstellung und Lagerhaltung und andererseits auch bei der Montage.

Der Neuerung liegt die Aufgabe zugrunde, ein demgegenüber vereinfachtes Bundflansch-Rohrleitungssystem zu schaffen.

Zur Lösung dieser Aufgabe ist die erfindungsgemäße Absperrklappe dadurch gekennzeichnet, daß das Gehäuse aus einem elastisch verformbaren Material besteht und an seinen beiden Anschlußseiten jeweils einen inneren Bundflansch mit einer Pfanne-Dichtfläche und einen äußeren Bundflansch mit einer Kugel-Dichtfläche aufweist. Auf diese Weise besteht die Möglichkeit, das Absperrklappengehäuse ohne zusätzliche Adapter bzw. Zwischenstücke direkt an die Kugel- bzw. Pfanne-Dichtflächen aufweisende Rohrleitungen anzuschließen, wobei je nach den speziellen Anforderungen zusätzliche Dichtringe zwischengelegt werden können.

Gemäß weiterer Erfindung ist vorgesehen, daß das Gehäuse beidseitig jeweils einen weiteren, außen liegenden, planaren Ringflansch aufweist, so daß die Absperrklappe auch in Verbindung mit üblichen Rohrleitungssystemen verwendet werden kann.

Die Erfindung wird im folgenden anhand der Zeichnung näher erläutert.

Figur 1 zeigt einen Axialschnitt des erfindungsgemäßen Absperrklappengehäuses.

Figur 2 illustriert die bekannte Montageweise von an ihren Anschlußenden Bundflansche mit Kugel- bzw. Pfanne-Dichtflächen aufweisenden Rohrleitungen, insbesondere Glas-Rohrleitungen.

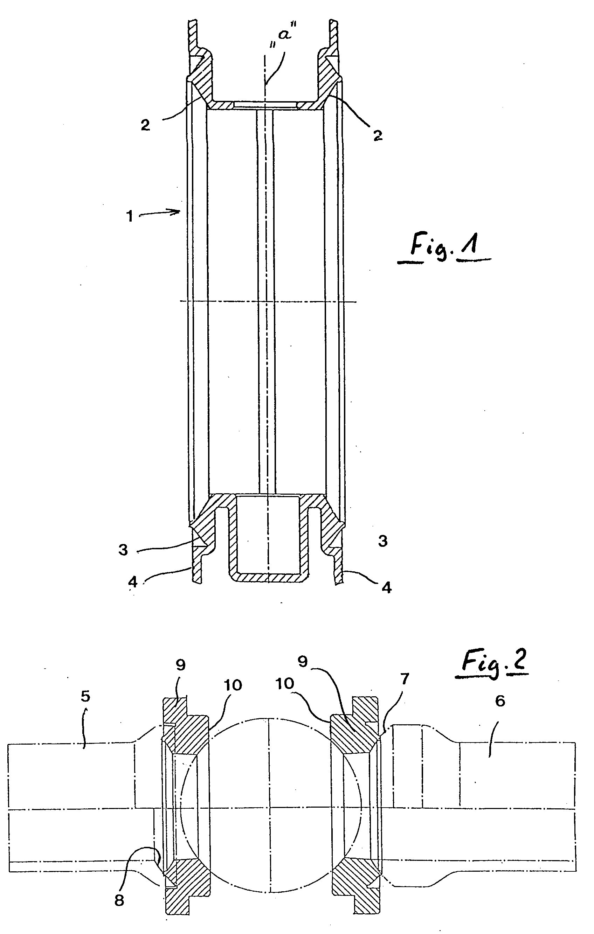

Figur 1 zeigt das Gehäuse 1 einer Absperrklappe, deren nicht dargestelltes, klappenförmiges Abschlußteil in üblicher Weise mittels eines durch die Achse (a) repräsentierten Drehzapfens verschwenkbar ist. Das Gehäuse 1 besteht vorzugsweise aus einem elastisch verformbaren Material, zum Beispiel Perfluor-Alkoxy-Polymer PFA), oder einem anderen geeigneten, beispielsweise durchsichtigen Kunststoff. Jede Anschlußseite des Gehäuses 1 ist mit zwei Bundflanschen mit sphärisch geschliffenen Dichtflächen versehen, und zwar einer inneren Pfanne-Dichtfläche 2 und einer äußeren Kugel-Dichtfläche 3. Jede Kugel-Dichtfläche 3 ist weiterhin von einem außenliegenden, planaren Ringflansch 4 für den Anschluß üblicher Rohrflanschsysteme versehen.

Mit den erfindungsgemäß einen integrierenden Bestandteil des Absperrklappengehäuses 1 bildenden Kugel- und Pfanne-Dichtflächen 2 und 3 ist es möglich, an die jeweiligen Anschlußseiten des Gehäuses 1 die in Figur 2 dargestellten, insbesondere aus Glas bestehenden Rohrleitungen 5 bzw. 6 anzuschließen, die an ihren Anschlußenden Bundflansche mit einer Kugel-Dichtfläche 7 bzw. einer Pfanne-Dichtfläche 8 aufweisen.

Figur 2 zeigt ein übliches Montagesystem, bei dem zum Anschließen der Rohrleitungen 5 und 6 an ein nicht dargestelltes Absperrklappengehäuse Zwischen- bzw. Adapterstücke 9 erforderlich sind, die jeweils einerseits einen Ringflansch 10 und andererseits zu den Kugel- und Pfanne-Dichtfläche 7 bzw. 8 komplementäre Kugel- und Pfanne-Dichtflächen aufweisen.

## Patentansprüche

1. Absperrklappe mit Gehäuse zum Einsetzen zwischen zwei Rohrleitungen, die an ihren Anschlußenden Bundflansche mit Kugel- bzw. Pfanne-Dichtflächen aufweisen, dadurch gekennzeichnet,
daß das Gehäuse (1) aus einem elastisch verformbaren Material besteht und an seinen beiden Anschlußseiten jeweils einen inneren Bundflansch mit einer Pfanne-Dichtfläche (2) und einen äußeren Bundflansch mit einer Kugel-Dichtfläche (3) aufweist.

2. Absperrklappe nach Anspruch 1, dadurch gekennzeichnet, daß das Gehäuse (1) beidseitig jeweils einen weiteren, außenliegenden, planaren Ringflansch (4) aufweist.
